Europäisches Patentamt

European Patent Office

Office européen des brevets

(19)

(11) EP 1 413 937 A1

(12) EUROPEAN PATENT APPLICATION

(43) Date of publication:
28.04.2004 Bulletin 2004/18

(51) Int Cl.⁷: G05B 19/045

(21) Application number: 02405897.6

(22) Date of filing: 21.10.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **ABB Schweiz AG
5400 Baden (CH)**

(72) Inventors:
• **Ganz, Christopher
8046 Zürich (CH)**

• **Paice, Andrew
5405 Dättwil (CH)**

(74) Representative: **ABB Patent Attorneys
c/o ABB Schweiz AG,
Intellectual Property (CH-LC/IP),
Brown Boveri Strasse 6
5400 Baden (CH)**

(54) **Finite state machine display for operator guidance**

(57)    In a control system (11) for controlling an apparatus and/or a process (10) based on a finite state machine, information made available to an operator is enhanced by a graphical representation of the finite state machine on a display. The graphical representation comprises at least two states $S_\alpha$ and $S_\omega$ and at least one allowed transition between said two states $S_\alpha$ and $S_\omega$. The probability associated with the transition displayed may also be indicated in the graphical representation.

Fig. 2

EP 1 413 937 A1

## Description

## Technical Field

The invention relates to the field of process control. It relates in particular to a finite state machine based control system for a process or an apparatus, in particular for process equipment for an industrial process or for an industrial plant.

## Prior Art

Current industrial control systems for industrial processes and plants are in many cases built based on simple analog or binary control loop structures, and on sequence control structures for more complex tasks. The underlying sequences are defined as a fixed sequence of steps, each step enabled when the previous step is successfully completed, and a step change condition is fulfilled. The sequence is in most cases linear, i.e. running from an initial step up to a final step with a few loops and branches. In case of an unexpected process disturbance, a normal behaviour of a sequencer is to stop and to indicate a failure to an operator. The operator then has the possibility to manually drive the process or apparatus into a desired status, from where the sequencer continues. The operator is informed about the status of the process or the apparatus through alarms and event messages, and through sequence displays which indicate the current and the next step as well as the status of step change conditions.

To solve more complex control problems, control systems that are based on a finite state machine rather than a linear sequencer are often used. Fully automatic control of a normal sequence including variant control is possible by means of such control systems. From the literature and from software engineering, the method of finite state machine modelling and design is known to solve complex control problems.

US Patent No. 5301100 describes a control system which is based on a finite state machine. The finite state machine is characterized by a finite number of states $S_i$ ($i \in \{1,...,n\}=:S$) exactly one of which it may reside in, and by a set of allowed transitions $t_{i,j}$ from a first state $S_i$ to a second state $S_j$, with $i,j \in T$, where $T \subseteq \{i,j \mid i,j \in S\}$, the set of allowed transitions, is a subset of all possible pairs $i, j$ with $i, j \in S$. In other words, a direct transition from the first state $S_k$ to the second state $S_l$ is possible only if an allowed transition $t_{k,l}$ exists. In this context, a subset $S' \subseteq S$ of a set $S$ may contain some or all elements of the set $S$.

More general definitions of finite state machines allow for a number $N_{i,j}$ of allowed transitions $t_{i,j}^{(m)}$ from first states $S_i$ to second states $S_j$ with m = l, ..., $N_{i,j}$. Finite state machines according to this definition are also a suitable basis for control systems.

The states of the finite state machine are in many cases designed to mirror apparatus and/or process conditions, modes and/or status when designing the control system. Transitions between states will e.g. be triggered by events, as will be explained below. However, this need not always be the case. Relatively complex processes may be controlled by simple finite state machines with just a few states and allowed transitions.

In order to control an apparatus or a process, the control system receives data from the process and/or the apparatus and sends instructions to the apparatus. In the case of a process, control over the process is executed through processing equipment, which in this case constitutes the apparatus being controlled, and to which instructions are sent. A behaviour of the control system depends on the state the finite state machine resides in.

The data received by the control system contains information about the status of the process and/or the apparatus, e.g. a fill level of a tank, a temperature of a liquid inside the tank, whether a valve is open or closed, a speed with which a pump rotates, an amount of liquid flowing through a tube per time unit, etc. The data may thus be in the form of a binary value, e.g. representing a valve state, in the form of a digital representation of a number, a value, a character or a string, in the form of an analogue value, or in any other form suitable for representing information regarding the process or the apparatus. In general, data will be time dependent, i.e. will vary continuously or stepwise with time.

The instructions sent by the control system dictate an actual behaviour of the apparatus or processing equipment. What instructions are sent depends primarily on the state in which the finite state machine resides. The instructions may have the form of output values that remain constant as long as the finite state machine remains in a given state. In general, however, a sequence of instructions will be output in a given temporal order with given intervals. Instead of a given order and/or given intervals, output of instructions may constitute a reaction to the data received. In particular, this may be the case in hybrid control systems in which at least one state controls the apparatus or processing equipment by means of continuous control. Some finite state machine control systems, as e.g. described in US Patent No. 5623680, provide for special entry actions and exit actions, i.e. sets of instructions particular to each state that are executed on entry into the state and on leaving the state.

Data received by the control system will in general originate from a number of sensors, which may be part of the apparatus, the process equipment, but may be independent from apparatus or process, as e.g. a sensor sensing environmental parameters like temperature. In general, at least one pre-processor will be interfaced between each sensor and the control system in order to convert raw data produced by the sensor into a format suitable to the control system. Such a pre-processor may contain an amplifier, and A/D-converter, or the like. The pre-processor is not necessarily a physical entity, it may be integrated with either the sensor or the control system. Data may be received from other sources, including, but not limited to, an external clock or an input device, e.g. a switchboard, a keyboard, a mouse, etc.

A transition into another state will take place if a transition condition is fulfilled. Transition conditions are in general particular to the state the finite state machine resides in. A transition condition may be separated into one or more partial conditions with the transition condition being a logical function of the partial conditions. For example, if the transition condition may be separated into more than one partial condition with the logical function being a conjunction of the partial functions, the transition condition will be fulfilled only if all the partial conditions are fulfilled. In this case, the partial conditions are said to be interlocked with one another.

A transition will often be initiated by an event in the process or apparatus, which in turn will cause the data received by the control system to fulfil a state change condition. However, a transition may also be initiated by the control system itself, without direct triggering through data received as described in the last paragraph, or by operator input through an input device.

Instructions sent by the control system will in general have to pass a postprocessor, which in turn is interfaced to the apparatus or the process equipment through a driver. Again, postprocessor and/or driver may be integrated with either the control system or the apparatus/process equipment.

Failure handling in today's industrial control systems - be they based on linear sequencers, finite state machines or continuous control - is in general left to the operator. While a finite state machine control system as described above permits automatic error recovery, such a full automatization is not always desirable from an operator's point of view, since error recovery may include manual mending of a piece of process equipment, i.e. may require human interaction with the apparatus or the process equipment. To solve unexpected problems, however, detailed knowledge of the process and/or apparatus and the control system is required. In many cases, procedures to resolve disturbances are known to a designer of the process or apparatus, and are at best available to the operator in the form of manuals. In addition, state-of-the-art control systems give no indications of disturbances that will occur or are likely to occur in future steps. As a consequence, disturbances can not be anticipated, nor can they be detected prior to occurrence.

**Description of the Invention**

It is an objective of the invention to create a finite state machine control system for an apparatus and/or a process that provides the operator with sufficient information about the apparatus and/or process and the control system, in particular to permit efficient operator interaction in case of unexpected process disturbances.

This objective is achieved by a control system according to claim 1. The control system is based on a finite state machine, which is defined by a finite number of states and by a set of possible or allowed transitions between at least one first state and for each first state at least one second state. When the control system is in operation, the finite state machine resides in exactly one current state at any given time and, according to the invention, the control system produces a graphical representation of the finite state machine. The graphical representation comprises at least two states and at least one allowed transition between said two states. Preferably, the graphical representation is in electronic, preferably digital form, so that it may be displayed on a graphical output device, e.g. a computer screen. The graphical representation serves as information for the operator and, as an advantage, conveys a clear and concise picture of the apparatus and/or process and the operation of the control system.

In another preferred embodiment of the invention, the graphical representation comprises all states and all allowed transitions, thus providing a complete and comprehensive overview of the apparatus and/or process and the operation of the control system.

In a preferred embodiment of the invention, the graphical representation shows states as state symbols and allowed transitions as connections between state symbols. A state symbol may be an icon, a string, a text box or anything else that may be uniquely identified with a corresponding state. A connection may preferably be a line, an arrow, or a pointer pointing from the first state to the second state corresponding to the allowed transition represented by the connection. A graphical representation of the kind just described is typically used to characterize finite state machines in drawings or figures, and is thus suggestive and straightforward to understand for an operator familiar with control systems.

In a preferred embodiment of the invention, when the control system is in operation, the current state in which the finite state machine resides is marked in the graphical representation, preferably by highlighting or colouring the state symbol corresponding to the current state. As soon as a state transition occurs, the graphical representation is updated accordingly. This way, the operator is constantly informed about the current state in which the finite state machine resides, and what second state or states may be entered next.

In a preferred embodiment of the invention, for at least one of the allowed transitions from a first state to a second state, the probability that said allowed transition will happen at an arbitrary point of time in the future is indicated in the graphical representation. Probabilities for a transition to happen at an arbitrary point of time in the future will be referred to as total transition probabilities in what follows. Preferably, total transition probabilities are indicated for a majority of allowed transitions, preferably at least for all allowed transitions with the current state as first state. The indication of probabilities helps the operator to supervise the apparatus and/or process, in particular, to check whether the apparatus and/or process behaves as desired. As a further advantage, if a high total transition probability to an undesired state, in particular an error or failure state, is indicated, the operator may try to prevent the corresponding transition by appropriate interaction with the apparatus, the process, or the control system.

In another preferred embodiment of the invention, for at least one of the allowed transitions from a first state to a second state, the probability that said allowed transition will happen within a given time interval is indicated in the graphical representation for at least one time interval, preferably a plurality of time intervals. Probabilities for a transition to happen within a given time interval will be referred to as interval related transition probabilities in what follows. In addition to the advantages of displaying the total transition probabilities, the interval related transition probabilities give the operator an indication about how long it will take for an allowed transition to occur. Depending on whether the allowed transition is desired or not, the operator may then take measures to speed up, slow down or prevent the occurrence of the allowed transition.

In general, probabilities, i.e. total transition probabilities and/or interval based transition probabilities change with time. If this is the case, the graphical representation is preferably updated regularly, e.g. at fixed time intervals or when at least one total probability has changed significantly. Probabilities may advantageously be indicated by numbers in the graphical representation. Probabilities may also be indicated by a thickness, colour and/or style of arrows or lines representing allowed transitions, etc.

In another preferred embodiment of the invention, the allowed transitions are classified according to the transition condition. In particular, a transition is classified as a

- controlled transition, if the corresponding transition condition, when separated into partial conditions, contains only partial conditions that depend on the control system, i.e. the allowed transition may be triggered automatically by the control system itself,

- operator facilitated transition, if the corresponding transition condition, when separated into partial conditions, contains at least one partial condition referring to an operator input, i.e. an operator command or interaction is required for the transition to occur,

- process driven transition, if the transition is neither a controlled transition nor an operator triggered transition.

Process driven transitions are caused by an intended or exceptional behavior of the controlled process and/or apparatus. The fact, e.g. that a certain tank fill level which is reached some time after a pump is started, is an intended behavior, whereas the full tank becoming empty although no drain valve was ever opened would be an exceptional behavior. Controlled transitions, on the other hand, do not directly depend on process or apparatus behavior, in particular, do not require data received by the control system to fulfill a predefined transition condition.

When in operation, the control system computes transition probabilities, i.e. either total transition probabilities or interval based transition probabilities, for controlled transitions from the conditions required to be fulfilled for the control system to trigger the transition. Preferably, transition probabilities for all controlled transitions are indicated in the graphical representation.

For operator triggered transitions, the transition probabilities can not be determined by the control system, since they depend on an operator interaction. However, if the corresponding transition condition contains partial conditions that do not refer to an operator input, probabilities of these partial conditions may be computed, which in turn may be used to compute release probabilities. A release probability is the probability that an operator triggered transition may take place, i.e. that, when the transition condition for the operator triggered transition is separated into partial conditions, all the partial conditions which do not refer to operator input are fulfilled. In a preferred embodiment of the invention, the release probability is computed by the control system for at least one operator triggered transition and indicated in the graphical representation. This has the advantage of indicating to the operator which decisions or interactions may be better or worse in the given situation.

Probabilities for process driven transitions can be determined from statistical knowledge about the process and/or apparatus. E.g., a probability that a transition into an erroneous state will occur equals the probability that part of the apparatus may break. Preferably, information about a condition of the apparatus, e.g. its age or the time that has elapsed since maintenance, is taken into account in determining the probabilities.

In another preferred embodiment of the invention, at least one economic parameter is indicated in the graphical representation for at least one of the states and/or for at least one of the allowed transitions. Preferably, the economic parameter may be a cost, preferably per unit time, that is caused by the apparatus and/or the process when the control system is in the corresponding state. However, costs may also be caused by a transition, e.g. if a making the transition causes consumption of a certain amount or number of material. Alternatively, the economic parameter may describe a consumption of lifetime of process equipment, a number of products produced per time unit, etc. The economic parameter may be a fixed value pre-programmed in the control system, but may also be variable, and favourably self-updating, for example in a self-learning system. Indication of economic parameters will convey a clearer picture of the economic aspects of running the apparatus and/or the process, and will aid in estimating economic aspects. This is particularly helpful in situations where the apparatus and/or the process can be influenced by operator interaction.

In another preferred embodiment of the invention, a short description of the transition conditions is given in the graphical representation. This way, the operator gets an even better overview of the apparatus, the process, and the control system.

In another preferred embodiment of the invention, a most probable path is determined by the control system. For determining the most probable path, known methods of optimization or linear programming can be applied. The most probable path is then marked in the graphical representation, favorably by highlighting the allowed transitions that constitute the most probable path.

In a preferred embodiment of the invention, a number of modes exist for the graphical representation. Depending on the mode, the graphical representation may comprise only certain subsets of all states or transitions; it may contain only a specific class of transitions, i.e. controlled, operator facilitated or process driven; it may comprise only transitions that have a probability of occurrence greater than a given threshold; specific subsets of states, e.g. dangerous or error states, and/or transitions may be coloured or otherwise highlighted; one or more subsets of states may be grouped to simplify the transition; etc. Preferably, the operator may switch between the modes. Preferably, modes may be defined or modified by the operator, e.g. by specifying preferences. Preferably, in addition to the graphical representation of the finite state machine, the control system is capable of producing a normal process representation as known to a person skilled in the art of control systems, and switching between the normal process representation and the graphical representation of the finite state machine is possible, e.g. through operator interaction.

In another preferred embodiment of the invention, the control system comprises a graphical display device for displaying the graphical representation. Preferably, the graphical display device comprises means for input of commands by the operator, and a graphical user interface permits the operator to select graphical representation modes, and/or input commands and/or preferences. Favourably, the graphical user interface will premit operations like zooming, scrolling, etc.

Further advantageous realizations can be found in the dependent claims.

**Brief Explanation of the Figures**

The invention will be explained in more detail in the following text with reference to exemplary realizations and in conjunction with the figures, in which:

Fig. 1 shows an example configuration of process equipment that can execute a simple process,

Fig. 2 shows an example of a finite state machine the control system according to the invention may be based on,

Fig. 3 shows an example of a first mode of a graphical representation of the finite state machine that the control system produces when in operation,

Fig. 4 shows an example of a second mode of the graphical representation of the finite state machine produces when in operation

The reference signs used in the figures are explained in the list of reference signs.

**Approaches to Realization of the Invention**

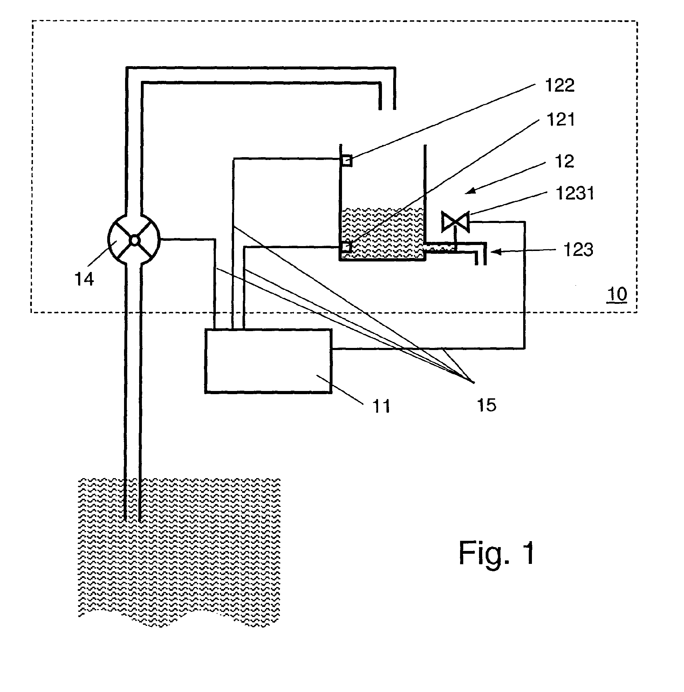

Fig. 1 shows an example configuration of process equipment 10 that can execute a simple process. The process equipment 10 comprises a pump 14 by means of which a fluid can be pumped from a reservoir into a tank 12. The tank comprises a first fluid sensor 121 and a second fluid sensor 122 for sensing a fill level. The tank comprises an outlet 123 with a valve 1231. Pump 14, first fluid sensor 121, second fluid sensor 122 and valve 1231 are connected to a control system 11 according to the invention by means of cable connections 15, which serve to transmit data and/or instructions to and/or from the control system 11.

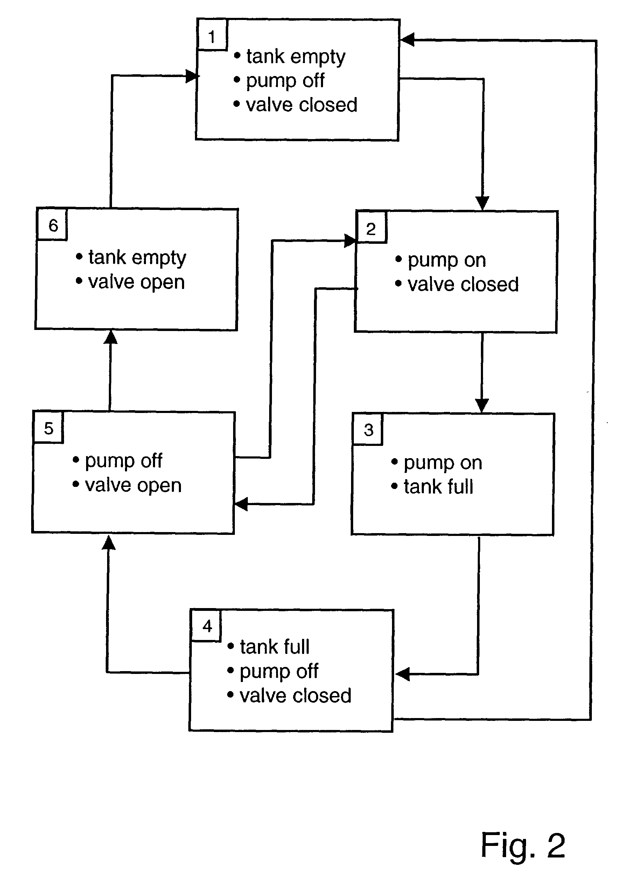

Fig. 2 shows an example of a finite state machine the control system according to the invention may be based on. The finite state machine comprises six states $S_i$ (i=1,...,6) which are depicted as rectangles that are accordingly numbered 1 through 6 at the top left corner. Allowed transitions $t_{i,j}$ are shown as arrows, with *i, j* ∈ T, where T = {1,2; 2,3; 2,5; 3,4; 4,5; 5,2; 5,6; 4,1}. While $t_{1,2}$, $t_{2,5}$, $t_{4,5}$, and $t_{5,2}$ are operator facilitated transitions, $t_{6,1}$ and $t_{3,4}$ are controlled transitions and $t_{2,3}$, $t_{4,1}$, and $t_{5,6}$ process driven transitions. The condition for $t_{2,3}$ to occur is that both the first and the second fluid sensors 121 and 122 are submerged by the fluid. Similarly, the condition for $t_{4,1}$ or $t_{5,6}$ to occur is that neither the first nor the second fluid sensor 121 and 122 is submerged by the fluid. $t_{4,1}$ is an example of an unintended transition that might happen, e.g., if a leakage was present in the tank 12.

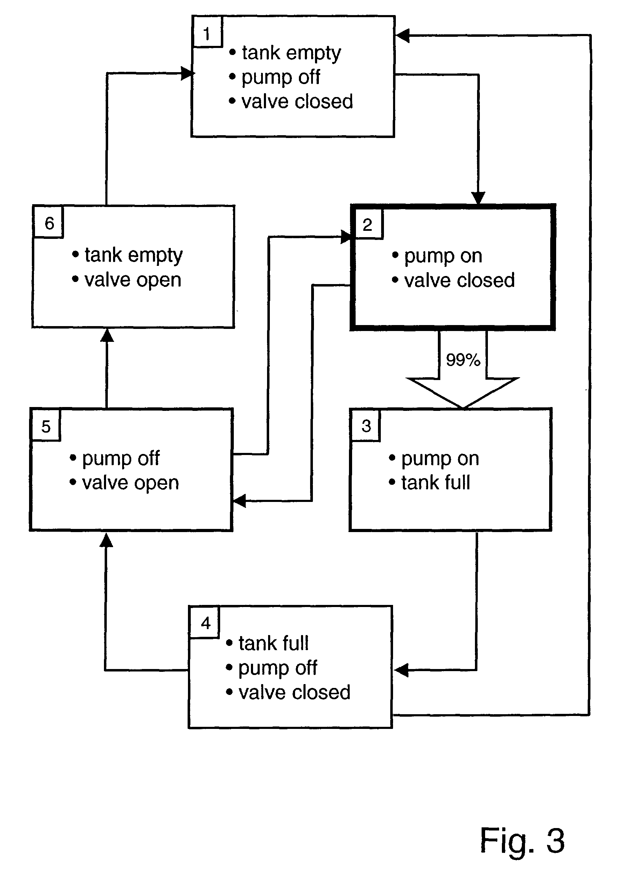

Fig. 3 shows an example of a first mode of a graphical representation of the finite state machine that the control system 11 produces when in operation. It is assumed that the finite state machine resides in state $S_2$, which is indicated by a thick line delimiting the rectangle that corresponds to the state $S_2$. The probability that the tank 12 will be full and at an arbitrary time after the pump 14 has been switched has been determined to be 99% from knowledge about the process. Hence, the total transition probability for $t_{2,3}$ to occur is also 99%, which is indicated by a thick arrow with the percentage written onto it.

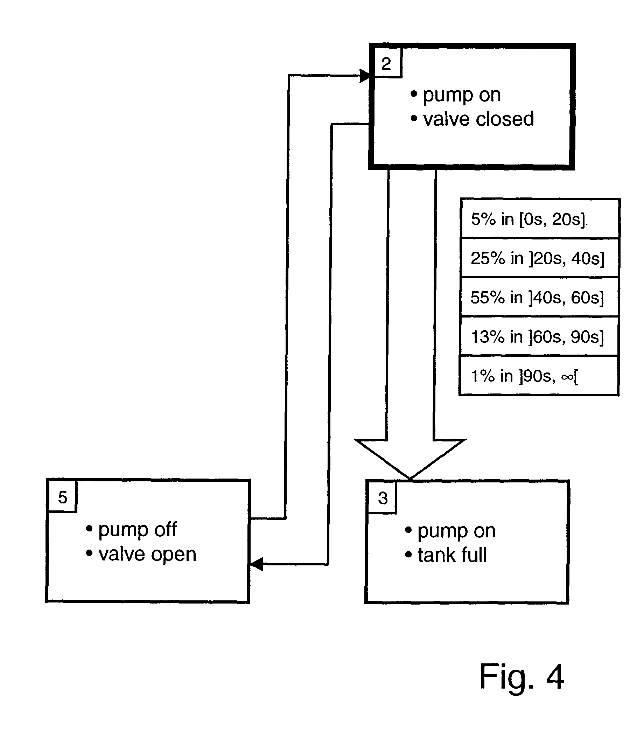

Fig. 4 shows an example of a second mode of the graphical representation of the finite state machine that the control system 11 produces when in operation, showing only a subset $\{S_2, S_3, S_5\}$ of states and the allowed transitions $t_{i,j}$ between any two of the states of the subset. Once more, it is assumed that the finite state machine resides in state $S_2$, which is indicated by a thick line delimiting the rectangle that corresponds to the state $S_2$. Interval based transition probabilities are indicated for a number of time intervals.

The control system 11 according to the invention may be realized in hardware by a person skilled in the art of electronics. Alternatively, a computer that is operationally connected to the process equipment may act as control system 11 when appropriate computer program code means are loaded onto said computer. If the computer comprises graphical display means, in particular, a computer screen, the graphical representation as shown in Fig. 3 or Fig. 4 is preferably displayed on said computer screen.

**List of Reference Signs**

| | |
|---|---|
| 10 | Process equipment, apparatus and/or process |
| 11 | Control system |
| 12 | Tank |
| 121 | First fluid sensor |
| 122 | Second fluid sensor |
| 123 | Outlet |
| 1231 | Valve |
| 14 | Pump |
| 15 | Cable connections |

**Claims**

1. A control system (11) for controlling an apparatus and/or a process (10),

    - said control system (11) being based on a finite state machine defined by

        • a finite number of states $S_i$, $i \in \{1,...,n\}=:S$, exactly one of which said finite state machine may reside in at any given time, and

        • for at least one first state $S_k$, a number $N_{k,l}$ of allowed transitions $t_{k,l}^{(m)}$ to at least one second state $S_l$, with $k, l \in T \subseteq \{i, j \mid i,j \in S\}$, m = l, ..., $N_{k,l}$,

**characterized in that**

    - the control system (11) is configured to produce a graphical representation of the finite state machine, comprising at least two states $S_\alpha$ and $S_\omega$ with $\alpha,\omega \in S$ and $\alpha \neq \omega$, and at least one allowed transition $t_{\alpha,\omega}^{(1)}$ between said two states $S_\alpha$ and $S_\omega$.

2. The control system (11) as claimed in claim 1, **characterized in that**

    - the graphical representation comprises all states $S_i$, $i \in S$, and all allowed transitions $t_{k,l}^{(m)}$ with $k, l \in T \subseteq \{i, j \mid i,j \in S\}$, m = 1, ..., $N_{k,l}$.

3. The control system (11) as claimed in one of the preceding claims, **characterized in that**

    - the graphical representation, when displayed on a graphical display device, shows states as state symbols and allowed transitions as connections between state symbols.

4. The control system (11) as claimed in one of the preceding claims, **characterized in that**

    - during an operation of the control system (11), the current state $S_k$ in which the finite state machine resides is marked in the graphical representation and

    - the graphical representation is updated when a state transition has occurred.

5. The control system (11) as claimed in one of the preceding claims, **characterized in that**

    - for at least one of the allowed transitions $t_{k,l}^{(m)}$, a transition probability is indicated in the graphical representation.

6. The control system (11) as claimed in claim 5, **characterized in that**

    - the transition probability is a total transition probability.

**7.** The control system (11) as claimed in claim 6, **characterized in that**

- the transition probability is an interval based transition probability.

**8.** The control system (11) as claimed in one of the claims 5 through 7, **characterized in that**

- the allowed transitions $t^{(m)}_{k,l}$ are classified as belonging to one of the following classes:

  • controlled transition, if a corresponding transition condition, when separated into partial conditions, contains only partial conditions that depend on the control system (11),

  • operator facilitated transition, if the corresponding transition condition, when separated into partial conditions, contains at least one partial condition referring to an operator input,

  • process driven transition, if the transition is neither a controlled transition nor an operator facilitated transition, and

- that the control system (11) is configured to compute transition probabilities for controlled transitions.

**9.** The control system (11) as claimed in one of the claims 5 through 8, **characterized in that**

- a most probable path is determined by the control system (11) and marked in the graphical representation.

**10.** The control system (11) as claimed in one of the preceding claims, **characterized in that**

- at least one economic parameter is indicated for at least one state $S_i$ or one allowed transition $t^{(m)}_{k,l}$.

**11.** A computer program product comprising a computer readable medium, having thereon: computer program code means that, when loaded onto a computer that is operationally connected to an apparatus and/or a process, makes said computer constitute a control system (11) according to one of claims 1 through 9.

Fig. 1

Fig. 2

Fig. 3

| 2 |
|---|
| • pump on |
| • valve closed |

| 5% in [0s, 20s] |
|---|
| 25% in ]20s, 40s] |
| 55% in ]40s, 60s] |
| 13% in ]60s, 90s] |
| 1% in ]90s, ∞[ |

| 5 |
|---|
| • pump off |
| • valve open |

| 3 |
|---|
| • pump on |
| • tank full |

Fig. 4

**European Patent Office**

## EUROPEAN SEARCH REPORT

Application Number

EP 02 40 5897

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SCHNEIDER S A ET AL: "CONTROLSHELL: A SOFTWARE ARCHITECTURE FOR COMPLEX ELECTROMECHANICALSYSTEMS" INTERNATIONAL JOURNAL OF ROBOTICS RESEARCH, SAGE SCIENCE PRESS, THOUSAND OAKS, US, vol. 17, no. 4, 1 April 1998 (1998-04-01), pages 360-380, XP000754799 ISSN: 0278-3649 | 1-3,11 | G05B19/045 |
| Y | * section 4.2. State Programming Design Methodology * <br> * section 5.1. Menu and Command Shell * <br> * section 6. Application Examples * <br><br> --- | 4 | |
| Y | PONTA D ET AL: "A simulator to train for finite state machine design" FRONTIERS IN EDUCATION CONFERENCE, 1996. FIE '96. 26TH ANNUAL CONFERENCE., PROCEEDINGS OF SALT LAKE CITY, UT, USA 6-9 NOV. 1996, NEW YORK, NY, USA,IEEE, US, 6 November 1996 (1996-11-06), pages 725-729, XP010209931 ISBN: 0-7803-3348-9 * the whole document * <br> --- | 4 | |
| A | US 5 638 522 A (DUNSMUIR MARTIN R M ET AL) 10 June 1997 (1997-06-10) * column 16, line 31 - column 20, line 49 * <br> * column 26, line 31 - column 27, line 28; claims 1-15; figures 10,11,15,18 * <br> --- | 1,2,11 | |
| A | US 5 577 201 A (WHITLOCK GARY C ET AL) 19 November 1996 (1996-11-19) * column 2, line 34 - column 3, line 4 * <br> * column 5, line 55 - column 6, line 65; figures 1-5 * <br> --- <br> -/-- | 1,11 | |

TECHNICAL FIELDS SEARCHED (Int.Cl.7)

G05B

The present search report has been drawn up for all claims

| Place of search | Date of completion of the search | Examiner |
|---|---|---|
| MUNICH | 10 March 2003 | Gardella, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

EP 1 413 937 A1

<table>
<tr><td>European Patent Office</td><td>EUROPEAN SEARCH REPORT</td><td>Application Number<br>EP 02 40 5897</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 219 590 B1 (BERNADEN III ALEX ET AL) 17 April 2001 (2001-04-17)<br>* column 5, line 39 - column 8, line 53; figure 4 *<br>--- | 1,11 | |
| A | US 5 644 487 A (DUFF STEPHEN B ET AL) 1 July 1997 (1997-07-01)<br>* column 3, line 25 - column 4, line 51; figures 1,2 *<br>----- | 1,11 | |

TECHNICAL FIELDS
SEARCHED     (Int.Cl.7)

The present search report has been drawn up for all claims

| Place of search | Date of completion of the search | Examiner |
|---|---|---|
| MUNICH | 10 March 2003 | Gardella, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 02 40 5897

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2003

| Patent document cited in search report | | Publication date | Patent family member(s) | | Publication date |
|---|---|---|---|---|---|
| US 5638522 | A | 10-06-1997 | US | 5493642 A | 20-02-1996 |
| US 5577201 | A | 19-11-1996 | NONE | | |
| US 6219590 | B1 | 17-04-2001 | US | 6477439 B1 | 05-11-2002 |
| US 5644487 | A | 01-07-1997 | NONE | | |

EPO FORM P0459

For more details about this annex : see Official Journal of the European Patent Office, No. 12/82